# FASCICULE DE BREVET EUROPEEN

(11) **EP 3 452 637 B1**
(45) Date de publication et mention de la délivrance du brevet: **20.10.2021**
(21) Numéro de dépôt: 17792331.5
(22) Date de dépôt: 03.05.2017
(51) Int. Cl.: C25B 9/01, C25B 9/015, C25B 11/046

(54) **ALLIAGE À BASE DE MAGNÉSIUM ET SON UTILISATION DANS LA FABRICATION D'ÉLECTRODES ET LA SYNTHÈSE ELECTROCHIMIQUE DE LA STRUVITE**
MAGNESIUMBASIERTE LEGIERUNG UND VERWENDUNG DAVON BEI DER HERSTELLUNG VON ELEKTRODEN UND DER ELEKTROCHEMISCHEN SYNTHESE VON STRUVIT
MAGNESIUM-BASED ALLOY AND USE OF SAME IN THE PRODUCTION OF ELECTRODES AND THE ELECTROCHEMICAL SYNTHESIS OF STRUVITE

(30) Priorité: 04.05.2016 CA 2928823
(43) Date de publication de la demande: 13.03.2019
(73) Titulaire: E2Metrix Inc., Sherbrooke, Québec J1L 2Z9 (CA)
(72) Inventeur: BEN SALAH, Ihsen, Sherbrooke Québec J1H 0H9 (CA); LAAROUSSI, Mohamed, Sherbrooke Québec, J1L 1Z6 (CA)
(74) Mandataire: Cabinet Laurent & Charras
(86) Numéro de dépôt international: PCT/CA2017/050537
(87) Numéro de publication internationale: WO 2017/190240

(56) Documents cités:
- CA-A1- 2 867 773
- CN-A- 103 936 105
- CN-A- 103 936 105
- US-A1- 2014 021 057
- US-A1- 2014 027 271
- US-A1- 2014 027 271
- US-A1- 2014 076 804
- Anonymous: "Magnesium Alloy AZ31B: Technical Datasheet", Aircraft Materials, 23 février 2015 (2015-02-23), pages 1-2, XP055581367, Extrait de l'Internet: URL:https://www.aircraftmaterials.com/data /magnesium/az31b.html [extrait le 2019-04-16]
- ALAM M E ET AL: "Development and characterization of new AZ41 and AZ51 magnesium alloys", MAGNESIUM TECHNOLOGY 2011 : PROCEEDINGS OF A SYMPOSIUM ; HELD DURING TMS 2011 ANNUAL MEETING AND EXHIBITION, SAN DIEGO, CALIFORNIA, USA, FEBRUARY 27 - MARCH 3, 2011, SPRINGER, CHAM, 1 janvier 2011 (2011-01-01), pages 553-558, XP009515723, DOI: 10.1007/978-3-319-48223-1_102 ISBN: 978-3-319-48568-3
- ALAM et al.: "Development and characterization of new AZ41 and AZ51 magnesium alloys", 2011 TMS Annual Meeting, Magnesium Technology, 2011, pages 553-558, XP009515723, DOI: 10.1007/978-3-319-48223-1_102
- Anonymous: "Magnesium Alloy AZ31B: Technical Datasheet", Aircraft Materials , 23 February 2015 (2015-02-23), XP055581367, Retrieved from the Internet: URL:https://www.aircraftmaterials.com/data /magnesium/az31b.html

## Description

### Référence à des demandes parentes

La présente demande de brevet revendique la priorité de la demande de brevet canadien no. 2,928,823 intitulée «Anodes au magnésium et leur utilisation dans la synthèse électrochimique de la struvite », déposée le 4 mai 2016 à l'Office de la propriété intellectuelle du Canada.

### Domaine de l'invention

La présente invention concerne essentiellement le domaine de l'électrochimie, et plus particulièrement un nouvel alliage à base de magnésium et des nouvelles anodes comprenant cet alliage au magnésium et leur utilisation en synthèse électrochimique de la struvite.

### Historique de l'invention

Plusieurs brevets sur la synthèse de la struvite, chacun avec sa spécificité, sont rédigés et déposés. La synthèse et/ou l'électrosynthèse de la struvite exige la présence du magnésium dont la concentration devrait respecter un ratio molaire entre N, P et Mg. Les exemples de brevets de dispositif d'électrocoagulation avec usage du magnésium comme anode sont nombreux à l'image du brevet portant le numéro de publication internationale WO 2001/019735 (Debillemont) concernant un dispositif et procédé de traitement de lisier, le document WO 1995/005347 (Rensman) concernant un système électrolytique avec des séries d'électrodes, le brevet avec numéro de publication internationale WO 2007/009749 (Egner et al.) concernant un réacteur et une méthode destinés à produire du MAP (Magnésium Ammonium Phosphate), le document CN 103 936 105 A (Jianku et al.) concernant l'utilisation d'un alliage à base de magnésium pour la fabrication d'anodes pour le traitement par électrocoagulation ainsi que la demande de brevet américaine avec numéro de publication US 2014/027271 (Berrak et al.) concernant une cartouche d'électrodes adaptée pour une unité d'électrocoagulation en utilisant un alliage à base de magnésium pour la fabrication d'anodes.

Les technologies de formation de la struvite incluent les brevets et documents suivants, le brevet américain US 4,389,317 (Trentelman et al.) concernant un procédé de réduction chimique des phosphates contenus dans l'eau, la demande internationale de brevet WO 2000/056139

(Graham) concernant une méthode pour prévenir la formation de la struvite dans les conserves de poissons ainsi que la demande de brevet américaine avec numéro de publication US 2014/021057 (Berrak) concernant une méthode pour le traitement d'un effluent riche en azote et la production de struvite comprenant l'introduction de l'effluent dans un système électrolytique. Un dispositif de traitement combiné en deux étapes, traitement dans un réacteur anaérobique suivi d'une seconde étape de formation de la struvite est déjà connu de la demande internationale WO 2009/102142 (Chung).

De nombreux alliages de magnésium sont connus. En particulier, l'alliage à base de magnésium AZ31B ayant une composition comprenant entre 2,5% et 3,5% Al, entre 0,7% et 1,3% Zn, un minimum de 0,2% Mn, un maximum de 0,05% Si, 0,05% Cu, 0,04% Ca, 0,005% Fe, 0,005% Ni, 0,3% autres éléments et la balance étant en Mg est détaillé dans la fiche technique disponible à l'adresse https://www.aircraftmaterials.com/data/magnesium/az31b.html. Un réacteur permettant de produire du phosphate ammoniaco-magnésien et procédé de production de phosphate ammoniaco-magnésien à partir de lisier ou de gaz d'échappement contenant de l'ammonium et faisant usage de magnésium, est déjà connu de la demande internationale WO 2007/009749 (Egner et al.) précitée. Dans ce document, le réacteur est usuel et l'agitation absente. Un dispositif de traitement faisant usage du magnésium est déjà connu de la demande internationale WO 2001/019735 (Debillemont). L'usage du magnésium est orienté vers le traitement du lisier, précisément la formation de la struvite.

Les anodes en magnésium standard utilisées pour des essais d'électrocoagulation ont montré des signes de défaillance représentés par des écaillements importants qui ont lieu sur la surface de l'anode surtout lorsque celles-ci sont soumises à des densités de courant élevées. Cet écaillement important affecte d'abord la quantité de magnésium disponible pour la coagulation et bien sur la durée de vie des anodes, ce qui rend la technologie moins attrayante et économiquement non viable.

De plus, si le magnésium est mentionné dans l'ensemble de ces brevets antérieurs, aucune de ces références ne décrit précisément la composition chimique de l'anode utilisée. L'art antérieur en question indique uniquement un matériau à base de magnésium. Or selon l'expertise développée par la Demanderesse, il s'avère que la composition chimique de l'anode est importante et que certains éléments impliqués dans la dite composition doivent être contrôlés et dosés adéquatement pour permettre à l'anode de diffuser correctement sans se dégrader avec écaillements.

### Objectifs de l'invention

Afin de répondre aux problèmes mentionnés ci-dessus, les recherches ont porté sur la mise au point d'une électrode, préférentiellement une anode, dotée de performances mécanique, chimique, morphologique, électrique et catalytique nécessaires pour une diffusion de coagulant optimale. Cette anode doit répondre à certaines exigences du milieu dans lequel elle va se trouver. Elle devra donc posséder des performances mécaniques, électriques et électrochimiques particulières.

### Performances mécaniques et physiques :

L'électrode doit avoir une résistance mécanique suffisante pour supporter les contraintes statiques et dynamiques et présenter une faible rugosité afin de permettre l'ascension des microbulles formées lors de l'électrolyse

### Performances électriques :

La résistivité électrique de l'électrode doit être inférieure à 50 µ/cm, bien qu'une résistivité de l'ordre de 300 µΩ/cm puisse être jugée acceptable. L'électrode devra supporter, sans dégradation, des densités de courant électriques allant jusqu'à 200 mA/cm² et devra pouvoir être connectée électriquement à une source d'alimentation.

### Performances électrochimiques :

L'électrode doit permettre le déchargement du magnésium par application d'un courant continu et avoir un profil de diffusion de magnésium uniforme sur toute la longueur du faisceau.

Afin d'atteindre ces objectifs, quatre principales étapes ont été planifiées.
**Étape 1 :** Caractérisation des anodes utilisées, détermination du profil du standard correspondant pour obtenir les propriétés mécaniques et électriques voulues.
**Étape 2 :** Établissement du profil, du taux de déchargement du magnésium et effet des paramètres lies à la nature de l'affluent.
**Étape 3 :** Caractérisation électrochimique.
**Étape 4 :** Démonstration de l'importance de la composition chimique.

D'autres objectifs et avantages de la présente invention seront mis en lumière suite à la description des incarnations préférées qui sera présentée ci-après, seront mentionnés dans les revendications et/ou apparaîtront à la personne versée dans l'art lors de l'utilisation de celle-ci.

### Sommaire de l'invention

Les objectifs précités de la présente invention sont rencontrés à l'aide d'un nouvel alliage à base de magnésium, particulièrement adapté pour la conception d'électrode, notamment d'anode utile en procédé électrochimique.

L'invention concerne en premier lieu un alliage à base de magnésium pour la fabrication d'électrodes, l'alliage à base de magnésium étant du type AZXY avec A pour aluminium, Z pour zinc, X représentant une teneur en % du premier élément avec 2% ≤ X ≤ 4%, et Y une teneur en % du second élément avec 0,5% ≤ Y ≤ 2%; l'alliage AZXY comprenant en sus une teneur en fer inférieure à 0,005%, notamment inférieure à 0,003%; et une balance de magnésium, les % indiqués étant des % en poids.

L'invention comprend en sus une teneur en manganèse Mn, en silicium Si et en étain Sn.

Selon l'invention, l'alliage a une composition comprenant environ (% en poids)
3,93% Al;
0,91% Zn;
0,48% Mn;
0,0024% Fe;
0,010% Si;
0,0002% Sn; et
la balance en Mg d'environ 94,67%.

L'invention concerne aussi l'utilisation de l'alliage au magnésium tel que décrit ici, pour la fabrication d'électrodes, en particulier pour la fabrication d'anodes.

Il est également décrit une électrode, de préférence une anode, comprenant un alliage de magnésium tel que décrit ici. Préférentiellement, l'électrode est de forme cylindrique, tubulaire ou semi-tubulaire. Encore plus préférentiellement, l'électrode est une anode constituant un faisceau anodique constitué d'une pluralité d'anodes cylindriques, tubulaire et/ou semi-tubulaire.

L'électrode peut comprendre une âme métallique, préférentiellement l'âme métallique comprend du fer.

L'invention concerne aussi l'utilisation d'au moins une électrode telle que définie ici, dans un procédé électrochimique de synthèse de la struvite.

L'invention concerne aussi une cartouche d'électrodes adaptée pour s'insérer dans un réacteur électrolytique afin de former, une fois assemblés, une unité d'électrocoagulation, la cartouche comprenant :
une couronne configurée pour se fixer et fermer une extrémité du réacteur électrolytique quand la cartouche est insérée dans ledit réacteur;
une électrode centrale de forme tubulaire connectée de façon opérationnelle au centre de la couronne;
au moins deux électrodes de forme semi-tubulaire et connectées de façon opérationnelle à la couronne de façon à entourer l'électrode centrale définissant ainsi un gap entre l'électrode centrale et les électrodes semi-tubulaires; et
un capot configuré pour se fixer à l'autre extrémité de l'électrode centrale et des électrodes semi-tubulaires maintenant ainsi le gap entre les électrodes;
et dans laquelle les électrodes comprennent l'alliage à base de magnésium tel que défini ici.

Selon un mode préférentiel de l'invention, la cartouche comprend trois électrodes semi-tubulaires (ou semi-cylindriques) de forme identique entourant l'électrode centrale, les trois électrodes formant une première couche d'électrodes semi-tubulaires.

Selon un mode préférentiel de l'invention, la cartouche comprend en outre trois électrodes semi-tubulaires (ou semi-cylindriques) de forme identique, connectées de façon opérationnelle à la couronne et ayant une taille supérieure aux électrodes de la première couche de façon à former une seconde couche d'électrodes entourant les électrodes de la première couche, ladite couronne et ledit capot étant configurés pour maintenir toutes les électrodes en place avec un second gap entre la première et deuxième couche d'électrodes.

Selon un mode préférentiel de l'invention, les électrodes de la première couche et/ou de la seconde couche sont espacées l'une par rapport à l'autre de façon à former un espace entre chaque électrode.

Selon un mode préférentiel de l'invention, les électrodes sont connectées à un système d'inversion de polarité afin de transformer de façon réversible l'électrode centrale en anode quand les électrodes semi-tubulaires sont transformées en cathodes, ou en cathode quand les électrodes semi-tubulaires sont transformées en anodes. Préférentiellement, le système d'inversion de polarité est contrôlé automatiquement par ordinateur.

Selon un mode préférentiel de l'invention, une distance entre l'électrode centrale et les électrodes semi-tubulaires est ajustable de façon à maintenir le gap constant quand les électrodes sont utilisées et consommées.

Tel que détaillés ci-après, le nouvel alliage permet d'obtenir des électrodes, et en particulier des anodes, ayant des performances mécaniques, électriques et électrochimiques améliorées et supérieures par rapport aux électrodes ou anodes connues à ce jour. Notamment, les anodes constituées de ce nouvel alliage ont une vitesse de corrosion beaucoup plus lente et des rendements améliorés par rapport aux anodes existantes.

### Brève description des dessins

Les avantages, objectifs et caractéristiques de la présente invention seront plus facilement observables en se référant à la description détaillée suivante qui sera faite à l'aide des figures dans lesquelles :

La Figure 1 est une photo d'une anode au magnésium neuve selon un mode préférentiel de l'invention;

La Figure 2 est une photo d'une anode au magnésium après 43 heures d'utilisation : avant nettoyage (Figure 2A) et après nettoyage (Figure 2B);

La Figure 3 est une photo d'une anode au magnésium après 109 heures d'utilisation : avant nettoyage (Figure 3A) et après nettoyage (Figure 3B);

La Figure 4 est une photo d'une anode au magnésium après 152 heures d'utilisation : avant nettoyage (Figure 4A) et après nettoyage (Figure 4B);

La Figure 5 est une photo d'une anode au magnésium après 189 heures d'utilisation : avant nettoyage (Figure 5A) et après nettoyage (Figure 5B) et un agrandi du bas de l'anode nettoyée (Figure 5C);

La Figure 6 est une photo d'une anode au magnésium après 277 heures d'utilisation : avant nettoyage (Figure 6A) et après nettoyage (Figure 6B);

La Figure 7 illustre une cartouche adaptée pour s'insérer dans un réacteur électrolytique afin de former, une fois assemblés, une unité d'électrocoagulation selon un mode préférentiel de l'invention;

La Figure 8 illustre en forme éclatée une cartouche avec une seule couche d'électrodes semi-tubulaires selon un mode préférentiel de l'invention;

La Figure 9 illustre en forme éclatée une cartouche avec deux couches d'électrodes semi-tubulaires selon un autre mode préférentiel de l'invention;

La Figure 10 est une vue en coupe d'une cartouche avec une seule couche d'électrodes semi-tubulaires selon un mode préférentiel de l'invention;

La Figure 11 est une vue en coupe d'une cartouche avec deux couches d'électrodes semi-tubulaires selon un mode préférentiel de l'invention; et

La Figure 12 illustre une unité électrolytique selon un mode préféré de l'invention.

### Description d'éléments préférentiels

Un nouvel alliage à base de magnésium et une nouvelle électrode, en particulier une anode, composée de cet alliage sont décrits ci-après. Même si l'invention sera décrite en prenant pour exemple une ou plusieurs incarnations préférées, il est important de comprendre que ces incarnations préférées sont utilisées afin d'illustrer l'invention et non afin d'en limiter la portée.

Le symbole % utilisé dans la présente demande, et sauf avis contraire, signifie un pourcentage en poids des éléments chimiques contenus dans l'alliage.

Le terme « environ » utilisé dans la présente demande, et sauf avis contraire, signifie que la valeur de la donnée indiquée (%, poids, température, temps, etc.) peut varier à l'intérieur d'un intervalle dépendant de la marge d'erreur de la méthode ou de l'appareil ayant été utilisé pour déterminer ladite donnée. Une marge d'erreur de 10% (pourcent) est généralement acceptée.

Les électrodes, cathodes et anodes, selon la présente invention, avec ou sans âme métallique, sont fabriquées par extrusion selon un mode de fabrication connu de la personne versée dans l'art.

Tel que mentionné ci-dessus, les anodes en magnésium standard utilisées pour des essais d'électrocoagulation ont montré des signes de défaillance représentés par des écaillements importants qui ont lieu sur la surface de l'anode surtout lorsque celles-ci sont soumises à des densités de courant élevées. Cet écaillement important affecte d'abord la quantité de magnésium disponible pour la coagulation et bien sur la durée de vie des anodes, ce qui rend la technologie moins attrayante et économiquement non viable. Des études ont été menées avec le Centre de Métallurgie du Québec (CMQ) pour caractériser les anodes sacrificielles utilisées dans l'Art antérieur et déceler l'origine de la défaillance. L'analyse chimique de l'anode de magnésium usuelle utilisée a révélé la présence des éléments suivants : Al, Zn, Mn, Cu, Fe, Si, Ni, Ca, OT, Mg.

Il est connu que le magnésium peut exister à l'état pur et sous forme d'alliage. On distingue différents systèmes d'alliages sur le marché et celui qui nous concerne ici est le système magnésium, aluminium, zinc. L'alliage est désigné par la nomenclature AZXY avec A pour aluminium et Z pour zinc, X représente la teneur % du premier élément et Y la teneur en % du second élément. Ainsi, AZ31 signifie que la teneur en aluminium est de 3% et en zinc 1%.

Le zinc (Z) est rajouté parce qu'il apporte à l'alliage de bonnes caractéristiques mécaniques; cependant, son effet négatif sur la microporosité et la crique à chaud, limite sa teneur maximale à 3% *(*F. Bazile, « *Propriété du magnésium et de ses alliages »,* Techniques de l'ingénieur, Traite Matériaux métalliques, M450*)*.

L'alliage utilisé ici est l'AZ31 mais l'alliage le plus utilisé dans l'industrie est l'AZ91D. Pour des raisons métallurgiques, l'alliage comporte dans sa composition d'autres éléments dans des proportions définies et ce, pour lui donner des propriétés et le qualifier à des usages. Ainsi, l'AZ31 possède une bonne résistance avec une addition de manganèse pour améliorer la résistance à la corrosion et permettre de précipiter et d'éliminer le fer, élément nuisible à celle-ci. Le cuivre, le fer, le nickel et le cobalt sont des éléments fortement indésirables vis-à-vis de la corrosion. Toutefois, on utilise parfois le cuivre dans de faibles proportions pour ses propriétés de conductivité électrique et thermique (F. Bazile).

Les premières anodes utilisées pour des essais en électrocoagulation étaient des anodes avec une âme en acier. La masse moyenne d'une tige en magnésium était de 450 g et celle de l'âme en acier de 50g. Initialement on considérait que l'âme en acier permettait de conduire le courant et de rigidifier l'anode. Cependant, dans la documentation technique, il s'est avéré que le magnésium était beaucoup plus conducteur que l'acier. Pour augmenter la durée de vie de l'anode nous avons considéré l'opportunité d'élaborer des anodes en magnésium sans âme en acier. Le but était d'évaluer le rôle de l'âme en acier dans la rigidification de l'anode, et la sécurité liée à l'usage d'une anode sans âme. Ainsi, dans plusieurs essais nous avons fabriqué et testé des anodes sans âme avec la composition chimique du tableau 2 ci bas.

Les premières applications des anodes en magnésium AZ31 avec âme en acier, dans des essais d'électrocoagulation ont montré des signes de défaillance et de passivation au niveau de l'anode en magnésium. On observait un important écaillement sur la surface de l'anode surtout lorsque cette dernière est soumise à une densité de courant appliquée supérieure à 20 mA/cm². Les conséquences de cet écaillement sont évidentes et se résument aux points suivants :
- Perte de magnésium donc de coagulant;
- Réduction de la durée de vie de l'anode;
- Perte de la performance suite à la passivation;
- Augmentation de la rugosité de l'anode;
- Réduction de l'effet des microbulles générées, donc de l'électro-flottation;
- Risque de colmatage du bas du réacteur; et
- Sécurité du système réduite.

Les anodes caractérisées par le CMQ sont des anodes avec âme en acier. Une anode neuve et une anode usée ont été retenues dans le cadre de ce service et les résultats sont comparés à ceux d'un standard AZ31B. Les résultats reportés dans le Tableau 1 montrent que la composition chimique des anodes testées se rapproche de celle du standard ce qui laisse croire que les anodes utilisées sont de l'AZ31B, un alliage de magnésium extrudé. Le produit de corrosion a aussi été analysé. Il s'agit d'oxyde de magnésium (poudre grise) et d'un mélange de différents oxydes (agglomérat vert) qui proviennent probablement du procédé de traitement des eaux usées.

Le CMQ a caractérisé la chimie des anodes de magnésium avec âme en acier par spectrométrie à émission optique et les microstructures par métallographie optique et par microscopie électronique à balayage. L'analyse chimique des anodes est présentée au Tableau 1 qui suit :

**Tableau 1: Composition chimique (% en poids) des anodes avec âme en acier :**

| | **Al** | **Zn** | **Mn** | **Cu** | **Fe** | **Si** | **Be** | **P** | **Ni** | **Mg** |
|---|---|---|---|---|---|---|---|---|---|---|
| **Anode 1** | 2,90 | 1,16 | 0,37 | 0,0013 | **0,0079** | 0,020 | 0,0001 | 0,00054 | 0,0015 | Bal. |
| **Anode 2** | 2,77 | 0,87 | 0,36 | 0,028 | **0,0104** | 0,016 | 0,0006 | 0,00029 | 0,0008 | Bal. |
| **Anode 3** | 2,94 | 0,87 | 0,37 | 0,034 | **0,0108** | 0,019 | 0,0004 | 0,00027 | 0,0010 | Bal. |
| **STD AZ31 B** | 2,5 3,5 | 0,6 1,4 | 0,2 ― 1,0 | 0,04 max | **0,005 max.** | 0,10 max | - | - | 0,005 max | Bal. |

Les analyses chimiques des anodes utilisées par les inventeurs confirment que ces dernières sont fabriquées à partir de l'alliage extrudé AZ31B pour lequel nous constatons une concentration en fer relativement élevée par rapport à la norme standard. Il a été déterminé que le fer est l'élément qui nuit le plus à la résistance à la corrosion des alliages de magnésium. Le fer est aussi à l'origine de l'écaillement de l'anode. C'est donc cet élément dont la présence dans la composition des anodes selon l'invention doit être réduite au maximum, et certainement à une concentration inférieure ou égale à la concentration requise au standard soit celle de 0,005% en poids.

Le zinc est aussi présent en plus grande quantité dans l'anode. Il a été déterminé que cet élément d'alliage aide à contrecarrer l'effet négatif du fer sur la résistance à la corrosion présent dans l'alliage. Les examens au microscope électronique à balayage montrent la formation de cavités plus ou moins étendues et profondes ou les produits de corrosion ont tendance à s'accumuler. Elles se traduisent par la présence de zones sombres sur les micrographies obtenues. De plus, la portion de surface couverte par ces zones sombres s'accroit avec une augmentation de la quantité d'électricité qui traverse l'électrode. Par ailleurs, les zones claires sont constituées de petits points d'éclat métallique qui correspondent au magnésium lui-même. Ces observations suggèrent que la dissolution est très localisée tandis que la rugosité de la surface augmente avec la quantité de courant ayant traversé l'anode. La rugosité devient telle qu'il est raisonnable d'envisager que des particules de magnésium se séparent complètement de l'anode pour demeurer captives dans le produit de corrosion. La documentation technique note aussi que le produit de corrosion dépend des espèces présentes dans la composition de l'anode, tel le fer lorsqu'il est en concentration élevée (F. Bazile, cité supra).

En résumé, l'anode présentement utilisée se consomme trop rapidement. Pour une application en milieu réel, eau usée de fromagerie, le faisceau anodique soumis à une densité de courant supérieure à 35 mA/cm², une surface cathodique largement supérieure à la surface anodique, a montré une durée de vie de 100 heures. Cette durée de vie d'anodes est économiquement non viable. Pour l'augmenter, la Demanderesse a identifié l'origine de cette perte de masse inopportune. Les principaux paramètres identifiés susceptibles d'affecter le comportement de l'anode et accélérer la corrosion sont listés ci-après:
- Densité de courant;
- Rapport Surface cathodique/Surface anodique;
- Composition chimique de l'anode;
- Paramètres liés à la nature de l'eau à traiter.

À la lumière des premiers résultats préliminaires, pour augmenter la durée de vie utile du faisceau anodique, la Demanderesse a entrepris les mesures suivantes :
- Développer une composition chimique spécifique d'une anode dans laquelle on réduit, voire élimine le produit de corrosion dans la composition chimique, à savoir le fer, voir tableau 2;
- Réduire le rapport des surfaces cathode/anode à une valeur proche de 1;
- Réduire la différence de potentiel entre les métaux utilisés comme cathode et anode, dans le cas ultime, utiliser le même matériau;
- Conditionner l'effluent à une conductivité qui permettrait d'entretenir une densité de courant de l'ordre de 20 mA/cm².

**Tableau 2 : Composition chimique (% en poids) de l'anode selon un mode préférentiel de l'invention :**

| | **Al** | **Zn** | **Mn** | **Cu** | **Fe** | **Si** | **Ni** | **Ca** | **OT** | **Mg** |
|---|---|---|---|---|---|---|---|---|---|---|
| **Anode** | 4 -5 | 0,6 1,4 | 0,2 min | 0,05 max | **0,004 max** | 0,30 | 0,005 | 0,30 | 0,30 | Bal. |
| **Standard AZ31 B** | 2,5 - 3,5 | 0,6 - 1,4 | 0,2 - 1,0 | 0,04 max | **0,005 max.** | 0,10 max | 0,005 max | - | - | Bal. |

Pour améliorer la durée de vie d'anodes de magnésium utilisées dans le procédé d'électrocoagulation, la Demanderesse a cherché à améliorer et caractériser la durée de vie de deux types d'anodes sacrificielles de magnésium.

Pour ce faire, des essais d'électrocoagulation à différentes densités de courant (20, 50, 100 et 300 mA/cm²) dans une solution de NaCl 0,5% p/v, et ce, pour deux types d'anodes de magnésium (avec et sans âme de fer) ont été effectués. Les différents essais et la caractérisation chimique et micrographique ont permis de conclure que :
- Les anodes sans âme renferment une plus faible concentration d'aluminium que les anodes avec âme de fer (2,41 vs. 3,93%). Dans les deux cas, la concentration en aluminium se retrouve en dehors du standard AZ31B;
- Les anodes sans âme de fer présentent une rugosité plus faible que les anodes avec âme de fer. Cependant, plus la densité de courant est élevée, plus cette différence s'amenuise;
- Les anodes sans âme présentent un taux de corrosion plus élevé pour toutes les densités de courant étudiées;
- Pour toutes les expériences effectuées, il a été remarqué que la quantité de "boue" récoltée dans le fond du réacteur à la fin des essais était tout le temps plus importante pour les anodes sans âme de fer;
- Les observations en microscopie optique et électronique confirment que les anodes avec âme de fer présentent un profil de corrosion plus accidenté (plus rugueux);
- Le type de corrosion observé pour les deux types d'anode est la corrosion généralisée.
   La corrosion ne suit pas un chemin préférentiel;
- Pour toutes les expériences, le résidu récolté dans le fond du réacteur et gratté sur les anodes est de l'oxyde de magnésium.

La différence dans les taux de corrosion observés est considérée comme étant due à la composition chimique. La quantité supplémentaire d'aluminium aurait diminué le taux de corrosion. Très peu de littérature existe à ce sujet. En effet, ces anodes sont généralement utilisées sans une source de courant externe.

De plus, l'âme de fer pourrait aussi avoir un effet sur le taux de corrosion.

Si la concentration en aluminium des anodes est aussi importante que stipulé ici, des anodes avec une composition chimique constante devraient être préférentiellement utilisées afin de favoriser un comportement pouvant être prédit.

Pour optimiser la composition chimique de l'anode en magnésium pour le procédé d'électrocoagulation, la Demanderesse a aussi requis les services du CMQ. Les résultats des expériences montrent que
- Le magnésium pur est à éviter comme matériau entrant dans la confection d'anodes sacrificielles;
- Les anodes selon l'invention offrent une meilleure résistance à la corrosion que l'AZ31. Ceci est probablement dû à une plus grande proportion d'aluminium et une contamination en fer plus faible que dans ce dernier.

La durée de vie du faisceau anodique s'est nettement améliorée avec les développements apportés, notamment la composition chimique, le rapport des surfaces proche de 1 et l'usage de matériaux de potentiel proche. Cependant, comme il est rapporté par la seconde loi de Faraday, la quantité de masse produite en imposant un courant est proportionnelle à l'intensité du courant appliqué et elle est intimement liée à la charge polluante. Ainsi, si on veut assurer une durée de vie à l'anode assez longue, on doit impérativement charger l'anode. Le faisceau anodique à neuf anodes a une masse en magnésium de 4500 g et lorsque soumis à une intensité de courant de 80A, a une durée de vie de 123 heures.

La Demanderesse a entrepris de faire évoluer l'anode et lui donner plus de masse. Ainsi, une première conception d'anode cylindrique de 10 Kg de magnésium a été développée et insérée dans un réacteur de 6 pouces de diamètre. Par la suite, pour des raisons de transport, l'anode cylindrique en magnésium a été délaissée au profit d'un ensemble de trois anodes semi-cylindriques en magnésium de 3Kg chacune, soit un total de 9 Kg à être inséré dans un réacteur de 6 pouces de diamètre. Ultimement, un nouveau concept où l'anode et la cathode sont de même matériau, soit trois anodes semi-cylindriques en magnésium de 3 Kg entourée de trois cathodes semi-cylindriques en magnésium de 5 Kg soit un total de 24 Kg. Ce type d'électrodes concentriques a déjà été décrit par la Demanderesse dans sa demande de brevet déposée aux États-Unis et publiée sous le no. US 2014/0027271 A1.

Toutefois, tel qu'indiqué ci-dessus, la présente invention concerne aussi des cartouches d'électrodes comprenant le nouvel alliage à base de magnésium.

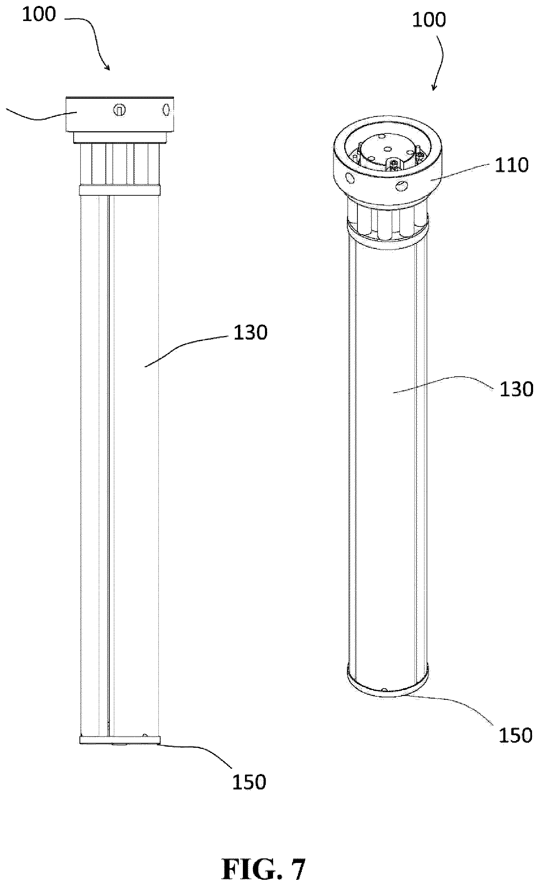

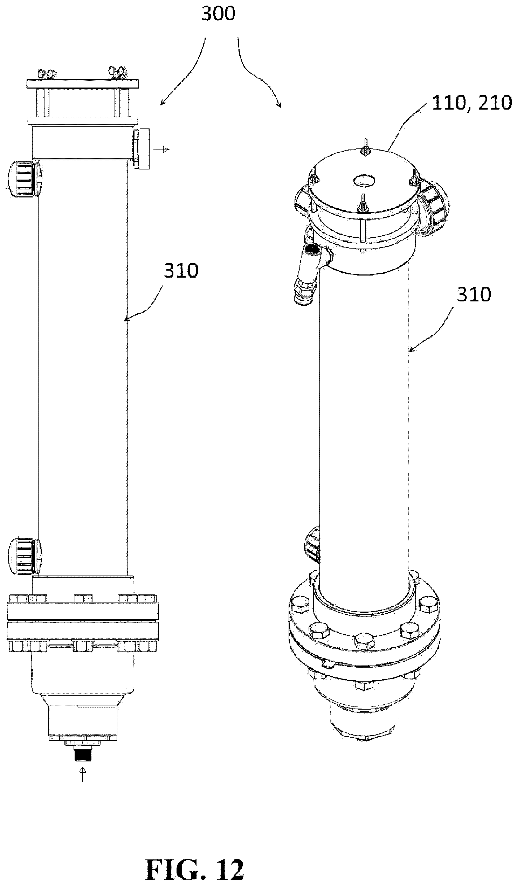

Des cartouches d'électrodes 100, 200 adaptées pour s'insérer dans un réacteur électrolytique 310 sont illustrés sur les Figure 7 à 11. Les cartouches forment, une fois assemblées, une unité d'électrocoagulation 300 illustrée sur la Figure 12.

Tel qu'illustrée sur la Figure 7, la cartouche 100 comprend une couronne 110 configurée pour se fixer et fermer une extrémité du réacteur électrolytique quand la cartouche est insérée dans ledit réacteur. La cartouche comprend aussi une électrode centrale 120 de forme tubulaire connectée de façon opérationnelle au centre de la couronne 110; et au moins deux électrodes, de préférence trois, de forme semi-tubulaire 130 et connectées de façon opérationnelle à la couronne 110 de façon à entourer l'électrode centrale définissant ainsi un gap 140 entre l'électrode centrale 120 et les électrodes semi-tubulaires 130.

La cartouche comprend en outre un capot 150 configuré pour se fixer à l'autre extrémité de l'électrode centrale et des électrodes semi-tubulaires maintenant ainsi le gap 140 entre les électrodes.

Tel que mentionné ci-dessus, les électrodes 130 comprennent l'alliage à base de magnésium tel que défini ici est objet de la présente invention.

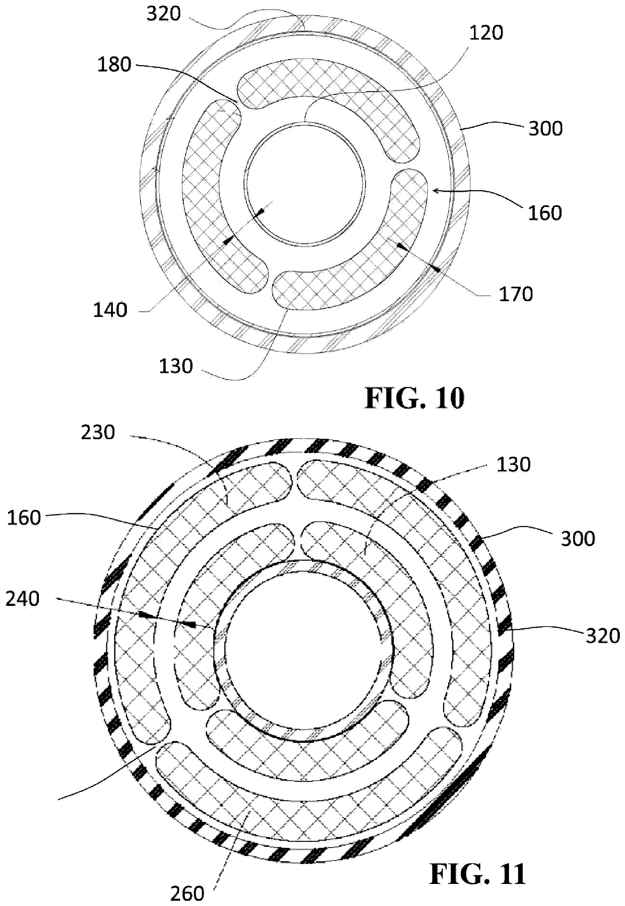

La cartouche d'électrodes 100 illustrée sur les Figure 7, 8 et 10 comprend trois électrodes semi-tubulaires 130 de forme identique entourant l'électrode centrale 120, les trois électrodes formant une première couche d'électrodes semi-tubulaires 160. Tel qu'illustré sur la Figure 10, la couche d'électrodes 160 forme un gap 140 avec l'électrode centrale. Une fois insérée dans le réacteur 310, un second gap 170 est formé entre la couche d'électrodes 160 et la paroi interne du réacteur 320.

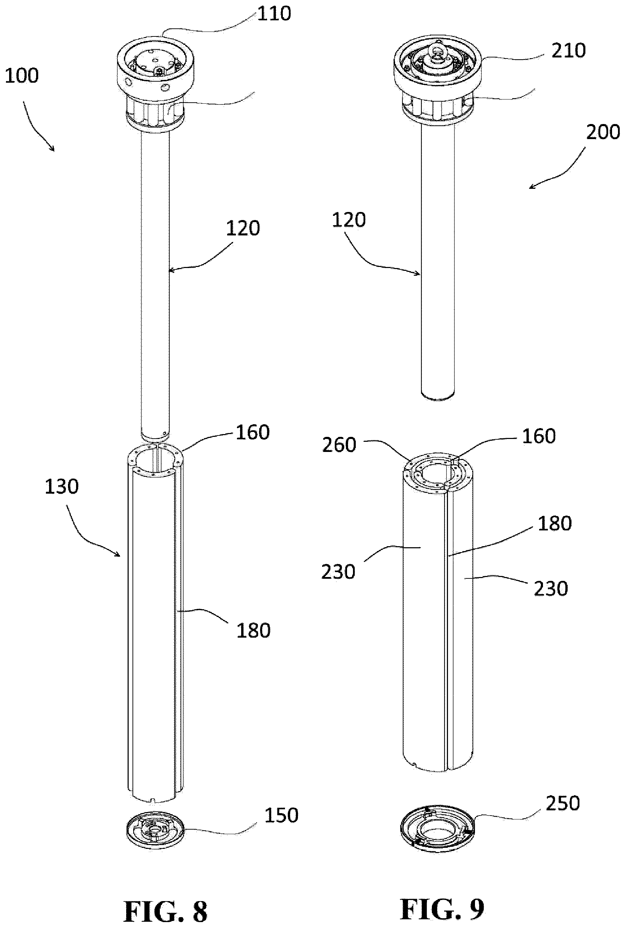

La cartouche d'électrodes 200 illustrée sur les Figure 9 et 11 comprend en outre trois électrodes semi-tubulaires 230 de forme identique, connectées de façon opérationnelle à une couronne 210 et ayant une taille supérieure aux électrodes de la première couche 160 de façon à former une seconde couche d'électrodes 260 entourant les électrodes 130 de la première couche 160. La couronne 210 et le capot 250 sont configurés pour maintenir les électrodes 130, 230 en place avec un second gap 240 entre la première et deuxième couche d'électrodes 160, 260.

Tel qu'illustré sur les Figures 10 et 11, les électrodes de la première couche et/ou de la seconde couche sont espacées l'une par rapport à l'autre de façon à former un espace 180 entre chaque électrode, et ce pour permettre la circulation du fluide à traiter.

Les électrodes peuvent être connectées à un système d'inversion de polarité afin de transformer de façon réversible l'électrode centrale en anode quand les électrodes semi-tubulaires sont transformées en cathodes, ou en cathode quand les électrodes semi-tubulaires sont transformées en anodes. Préférentiellement, le système d'inversion de polarité peut être contrôlé automatiquement par ordinateur.

Avantageusement, la distance entre l'électrode centrale et les électrodes semi-tubulaires peut être ajusté de façon à maintenir le gap constant quand les électrodes sont utilisées et consommées.

La Demanderesse développe aussi des réacteurs électrochimiques dans lesquels la masse totale des cartouches d'électrodes peut s'élever à plus de 70 kg.

Cette augmentation de masse en magnésium va conférer à l'anode une durée de vie assez conséquente et la rendre économiquement viable.

| | | |
|---|---|---|
| Faisceau anodique neuf anodes | 9*500 g | 4500 g |
| Anode cylindrique ou tubulaire | 1*10000 g | 10 000 g |
| Anode semi tubulaire | 3*3000 g | 9 000 g |
| Anode et cathode en magnésium | 3*3000 g + 3*5000 g | 24 000 g. |

**TABLEAU COMPARATIF**

| | **UNITES** | **FAISCEAU 6 ANODES** | **FAISCEAU 9 ANODES** | **ANODE CYLINDRIQUE** | **ANODE SEMI-TUBULAIRE** |
|---|---|---|---|---|---|
| **SURFACE ANODIQUE (SA)** | cm² | 2862 | 4293 | 6103 | 6500 |
| **SURFACE CATHODIQUE (SC)** | cm² | 5680 | 5680 | 5680 | 5680 |
| **SC/SA** | | 1,98 | 1,32 | 0,93 | 0,87 |
| **PERTE EN SURFACE** | % | 68 | 68 | 0,4 | 0,4 |
| **MASSE** | g | 2700 | 4050 | 10000 | 9000 |
| **EFFICACITE** | % (pourcent) | 63 | 71 | 100 | 99 |
| **DUREE DE VIE THEORIQUE** | h | 88 | 132 | 349 | 312 |

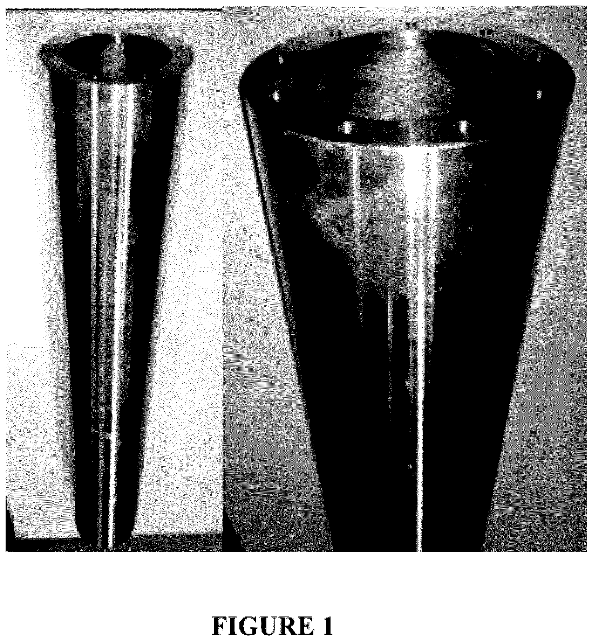

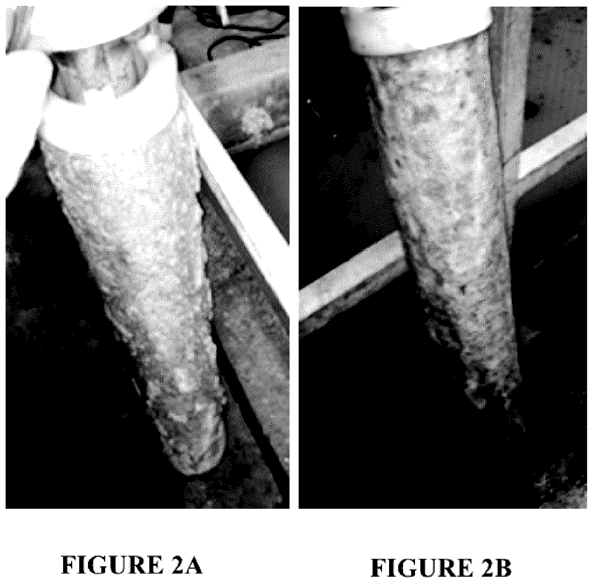

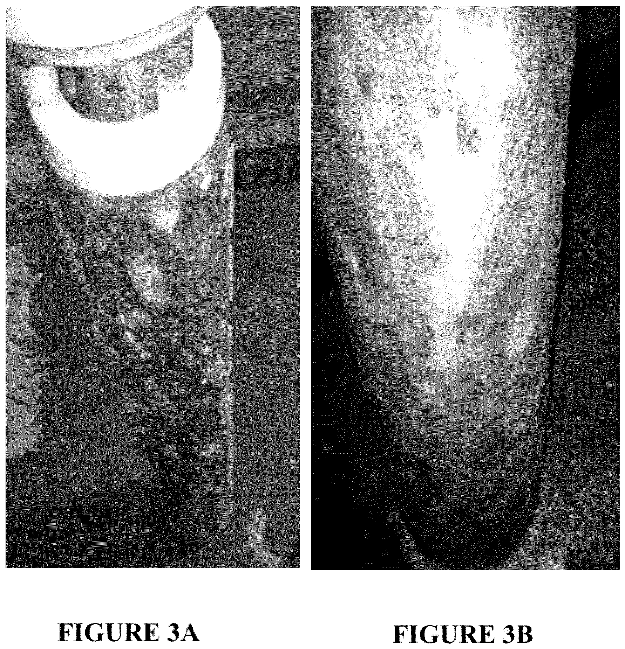

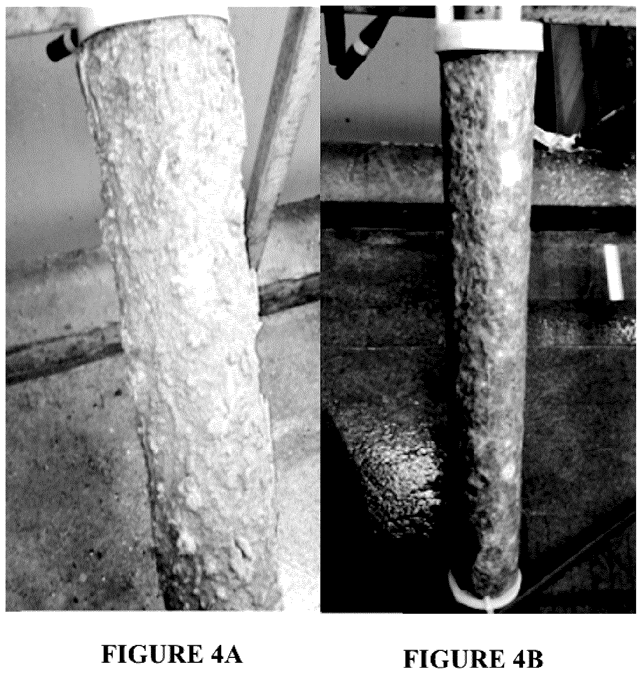

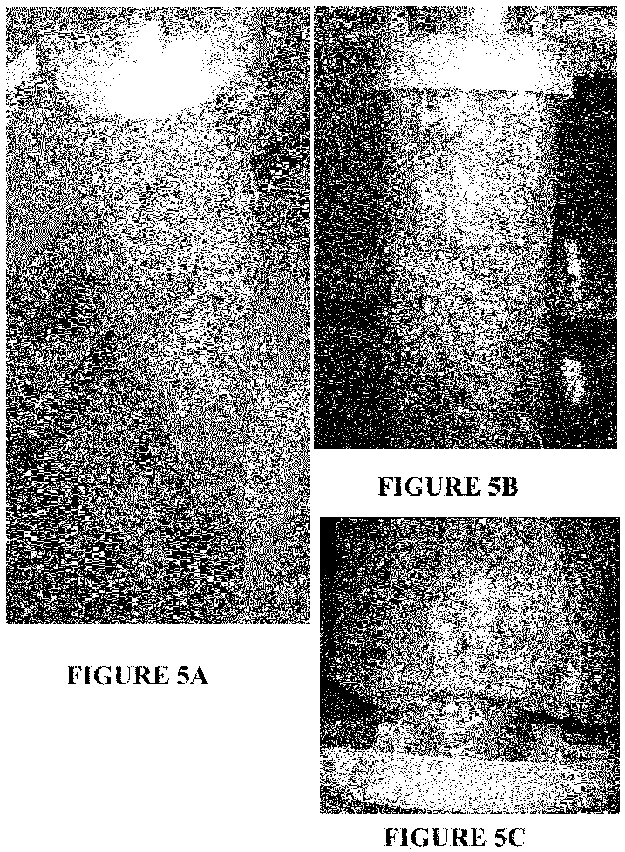

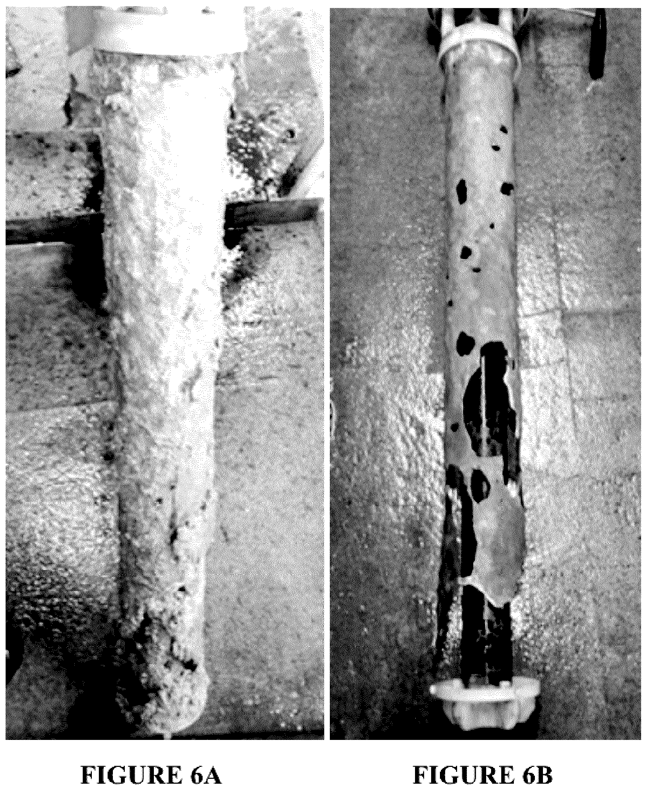

L'anode cylindrique utilisée, telle que celle illustrée sur la Figure 1, a une surface pleine interne et externe évaluée à 6103 cm² répartie ainsi surface interne 2513 cm² et surface externe 3590 cm² et est en alliage de magnésium AZ31 de composition chimique avec une teneur en fer très élevée (voir tableau 1). Les Figures 2-6 montrent l'anode après différentes durées d'utilisation, avant et après le nettoyage. La figure 6B montre une anode usée à 87% par rapport à l'anode neuve que l'on voit sur la Figure 1.

L'analyse des résultats :

| | |
|---|---|
| Masse initiale de l'anode (g) : | 10310 |
| Masse finale de l'anode (g) : | 1325 |
| Masse restante (%) | 13 |
| Masse consommée (g) : | 8985 |
| Masse consommée (%) | 87 |
| Temps de fonctionnement effectif (h) : | 277,5 |
| Temps de fonctionnement en continu (jours) | 11,6 |
| Durée des essais (h) : | 312 |
| Consommation horaire moyenne (g/h): | 32,5 |
| Épaisseur initiale de la paroi (mm): | 19 |
| Épaisseur finale (moyenne) (mm): | 3 |

Lors des essais d'électrocoagulation, des baisses de courant sont observées. Ces baisses sont dues à la passivation de l'anode cylindrique, une couche perméable et friable se forme et a tendance à augmenter la résistance du milieu. Cependant, malgré la présence de cette couche, le débit de l'effluent n'a pas baissé et est resté stable.

La présence de cette couche a nécessité un nettoyage fréquent, tant à l'extérieur de l'anode cylindrique qu'à l'intérieur visiblement obstrué. Cette couche cependant n'a pas été observée dans un réacteur monté avec un faisceau neuf anodes selon l'invention de composition chimique différente de celle de l'anode cylindrique (AZ31). Cette différence de comportement est intimement liée à la composition chimique. On remarque alors qu'avec des anodes selon l'invention, les opérations de nettoyage sont réduites ou évitées, et juste les interventions courantes de changement des anodes et l'entretien préventif sont nécessaires.

De plus, la consommation prévue théoriquement est en dessous de celle réelle d'environ 30%. Cet excès est dû vraisemblablement à des réactions chimiques qu'il faut vérifier avec des essais au laboratoire. Il faut remarquer que la consommation théorique est de nature électrochimique alors que pour la consommation réelle, la contribution de la diffusion chimique n'est pas à négliger surtout lorsqu'on est en milieu salin, où l'ion chlorure a tendance à accélérer cette diffusion.

Dans la mesure où la différence de masse de Mg, due aux réactions chimiques, participe à l'abattement des polluants, cette perte n'est pas considérée comme perte mais plutôt comme un dosage ne nécessitant pas de courant électrique, ce qui implique une diminution dans la puissance électrique de traitement.

Selon l'invention, la composition de l'anode est (% en poids) :
3,93% Al;
0,91% Zn;
0,48% Mn;
0,0024% Fe;
0,010% Si;
0,0002 Sn;
balance en Mg d'environ 94,67%.

Les électrodes décrites ici et constituées de l'alliage selon l'invention peuvent être utilisées dans tout type de méthode ou système électrochimique, tels que par exemple ceux décrit dans le brevet de la Demanderesse no. US 9,194,049 B2 et la demande en continuation de ce brevet no. US 2016/0039687 A1.

Bien qu'elle ait été décrite à l'aide d'une ou plusieurs incarnations préférées, il faut bien comprendre que la présente invention peut être utilisée, employée et/ou incarnée dans une multitude d'autres formes dans la limite définie par les revendications.

## Revendications

1. Un alliage à base de magnésium pour la fabrication d'électrodes l'alliage à base de magnésium ayant une composition comprenant environ (% en poids):
3,93% aluminium Al;
0,91% zinc Zn;
0,48% manganèse Mn;
0,0024% fer Fe;
0,010% silicium Si;
0,0002% étain Sn; et
la balance en magnésium Mg d'environ 94,67%.

2. Utilisation de l'alliage au magnésium tel que décrit dans la revendication 1, pour la fabrication d'électrodes.

3. Utilisation selon la revendication 2, pour la fabrication d'anodes.

4. Utilisation selon la revendication 2 ou 3, **caractérisée en ce que** l'électrode est utilisée dans un procédé électrochimique de synthèse de la struvite.

5. Une cartouche d'électrodes adaptée pour s'insérer dans un réacteur électrolytique afin de former, une fois assemblés, une unité d'électrocoagulation, la cartouche comprenant :
une couronne configurée pour se fixer et fermer une extrémité du réacteur électrolytique quand la cartouche est insérée dans ledit réacteur;
une électrode centrale de forme tubulaire connectée de façon opérationnelle au centre de la couronne;
au moins deux électrodes de forme semi-tubulaire et connectées de façon opérationnelle à la couronne de façon à entourer l'électrode centrale définissant ainsi un gap entre l'électrode centrale et les électrodes semi-tubulaires; et
un capot configuré pour se fixer à l'autre extrémité de l'électrode centrale et des électrodes semi-tubulaires maintenant ainsi le gap entre les électrodes;
et dans laquelle les électrodes comprennent l'alliage à base de magnésium tel que défini dans la revendication 1.

6. La cartouche d'électrodes selon la revendication 5, comprenant trois électrodes semi-tubulaires de forme identique entourant l'électrode centrale, les trois électrodes formant une première couche d'électrodes semi-tubulaires.

7. La cartouche d'électrodes selon la revendication 6, comprenant en outre trois électrodes semi-tubulaires de forme identique, connectées de façon opérationnelle à la couronne et ayant une taille supérieure aux électrodes de la première couche de façon à former une seconde couche d'électrodes entourant les électrodes de la première couche, ladite couronne et ledit capot étant configurés pour maintenir les électrodes en place avec un second gap entre la première et deuxième couche d'électrodes.

8. La cartouche selon la revendication 7, dans laquelle les électrodes de la première couche et seconde couche sont espacées l'une par rapport à l'autre de façon à former un espace entre chaque électrode.

9. La cartouche selon l'une quelconque des revendications 5 à 8, dans laquelle les électrodes sont connectées à un système d'inversion de polarité afin de transformer de façon réversible l'électrode centrale en anode quand les électrodes semi-tubulaires sont transformées en cathodes, ou en cathode quand les électrodes semi-tubulaires sont transformées en anodes.

10. La cartouche selon la revendication 9, dans laquelle le système d'inversion de polarité est contrôlé automatiquement par ordinateur.

11. La cartouche selon l'une quelconque des revendications 5 à 10, dans laquelle une distance entre l'électrode centrale et les électrodes semi-tubulaires est ajustable de façon à maintenir le gap constant quand les électrodes sont utilisées et consommées.

## Patentansprüche

1. Eine Legierung auf Magnesiumbasis zur Herstellung von Magnesium mit einer Zusammensetzung mit ungefähr
3,93% Aluminium Al,
0,91 % Zink Zn,
0,48% Mangan Mn;
0,0024 % Eisen Fe,
0,010% Silizium Si;
0,0002% Zinn Sn; und
der Rest Magnesium Mg von ungefähr 94,67%.

2. Verwendung der Magnesiumlegierung wie in Anspruch 1 beschrieben, zur Herstellung von Elektroden.

3. Verwendung nach Anspruch 2, zur Herstellung von Anoden.

4. Verwendung nach Anspruch 2 oder 3, **dadurch gekennzeichnet, dass** die Elektrode in einem elektrochemischen Verfahren zur Synthese von Struvit verwendet wird.

5. Eine Elektrodenkartusche, zum Einsatz in einem Elektrolysereaktor um nach Zusammenbau eine Elektrokoagulationseinheit zu bilden, wobei die Kartusche enthält:
eine Krone, die dazu konfiguriert ist, auf einem Endstück des Reaktors befestigt zu werden und diesen zu verschließen, wenn die Kartusche in diesen Reaktor eingesetzt wird,
eine zentrale Elektrode, rohrförmig, operativ mit dem Zentrum der Krone verbunden,
mindestens zwei halbrohrförmige Elektroden, operativ verbunden mit der Krone, so dass sie die Zentralelektrode umgeben und so einen Spalt zwischen der zentralen Elektrode und den halbrohrförmigen Elektroden zu definieren; und
eine Haube, konfiguriert zur Befestigung am anderen Ende der zentralen Elektroden und der halbrohrförmigen Elektroden, die so den Spalt zwischen den Elektroden offen hält;
und in der die Elektroden die Legierung auf Magnesiumbasis wie in Anspruch 1 definiert, enthalten.

6. Elektrodenkartusche nach Anspruch 5, mit drei halbrohrförmigen Elektroden, mit gleicher Form, die die zentrale Elektrode umgeben, die drei Elektroden bilden eine erste Schicht halbrohrförmiger Elektroden.

7. Elektrodenkartusche nach Anspruch 6, mit außerdem drei halbrohrförmigen Elektroden, mit gleicher Form, die operativ mit der Krone verbunden sind und deren Größe höher ist, als die Elektroden der ersten Schicht, so dass sie eine zweite Schicht bilden, die die Elektroden der ersten Schicht umgeben, diese Krone und diese Haube sind dazu konfiguriert, die Elektroden an Ort und Stelle zu halten, mit einem zweiten Spalt zwischen der ersten und der zweiten Elektrodenschicht.

8. Elektrodenkartusche nach Anspruch 7, bei der die Elektroden der ersten Schicht und der zweiten Schicht einen Abstand voneinander haben, so dass sie einen Raum zwischen jeder Elektrode bilden.

9. Kartusche nach einem beliebigen der Ansprüche 5 bis 8, bei der die Elektroden mit einem Polaritätswechselsystem, um die zentrale Elektrode in umkehrbarer Weise in eine Anode umzuwandeln, wenn die halbrohrförmigen Elektroden in Kathoden umgewandelt werden oder in eine Kathode, wenn die halbrohrförmigen Elektroden in Anoden umgewandelt werden.

10. Elektrodenkartusche nach Anspruch 9, bei der das Polaritätswechselsystem automatisch vom Computer kontrolliert wird.

11. Kartusche nach einem beliebigen der Ansprüche 5 bis 10, bei der ein Abstand zwischen der zentralen Elektrode und den halbrohrförmigen Elektroden einstellbar ist, so dass der Spalt konstant bleibt, wenn die Elektroden genutzt und verbraucht werden.

## Claims

1. A magnesium-based alloy for the manufacture of electrodes (weight %), the magnesium-based alloy having a composition comprising about:
3.93% aluminum Al;
0.91 % zinc Zn;
0.48% manganese Mn;
0.0024% iron Fe;
0.010% silicon Si;
0.0002% pewter Sn; and
the magnesium Mg balance of about 94.67%.

2. Use of the magnesium-based alloy as described in claim 1, for the manufacturing of electrodes.

3. Use according to claim 2, for the manufacturing of anodes.

4. Use according to claim 2 or 3, **characterized in that** the electrode is used in an electrochemical process for the synthesis of struvite.

5. An electrode cartridge adapted to be inserted into an electrolytic reactor to form, once assembled, an electrocoagulation unit, the cartridge comprising:
a ring configured to be attached and to close an extermity of the electrolytic reactor when the cartridge is inserted in said reactor;
a central electrode of tubular shape operatively connected to the center of the ring;
at least two electrodes of semi-tubular shape and operatively connected to the ring so as to surround the central electrode thereby defining a gap between the central electrode and the semi-tubular electrodes; and
a hood configured to attach to the other extermity of the center electrode and of
the semi-tubular electrodes thereby maintaining the gap between the electrodes;
and in which the electrodes comprise the magnesium-based alloy as defined in claim 1.

6. The electrode cartridge according to claim 5, comprising three semi-tubular electrodes of identical shape surrounding the central electrode, the three electrodes forming a first layer of semi-tubular electrodes.

7. The electrode cartridge according to claim 6, further comprising three semi-tubular electrodes of identical shape, operatively connected to the ring and having a size greater than the electrodes of the first layer so as to form a second layer of electrodes surrounding the electrodes of the first layer, said ring and said hood being configured to hold the electrodes in place with a second gap between the first and second electrode layers.

8. The electrode cartridge according to claim 7, in which the electrodes of the first layer and second layer are spaced apart from each other so as to form a gap between each electrode.

9. The electrode cartridge according to any one of claims 5 to 8, in which the electrodes are connected to a polarity reversal system to reversibly transform the central electrode in an anode when the semi-tubular electrodes are transformed into cathodes, or in cathode when the semi-tubular electrodes are transformed into anodes.

10. The electrode cartridge according to claim 9, in which the polarity inversion system is automatically controlled by a computer.

11. The electrode cartridge according to any one of claims 5 to 10, in which a distance between the central electrode and the semi-tubular electrodes is adjustable so as to maintain the gap constant when the electrodes are used and consumed.
